Europäisches Patentamt

European Patent Office

Office européen des brevets

(11) Publication number: **0 135 047**
**B1**

(12) **EUROPEAN PATENT SPECIFICATION**

(45) Date of publication of patent specification: **29.11.89**

(21) Application number: **84108618.4**

(22) Date of filing: **20.07.84**

(51) Int. Cl.⁴: **G 02 B 5/32**

(54) **A method of producing a hologram lens.**

(30) Priority: **25.07.83 JP 134325/83**

(43) Date of publication of application:
**27.03.85 Bulletin 85/13**

(45) Publication of the grant of the patent:
**29.11.89 Bulletin 89/48**

(84) Designated Contracting States:
**CH DE FR GB IT LI NL SE**

(56) References cited:

**OPTICS COMMUNICATIONS, vol. 9, no. 3, November 1973, London, GB; W.T. WELFORD "Aplanatic hologramm lenses on spherical surfaces", pages 268, 269**
**PATENT ABSTRACTS OF JAPAN, vol. 5, no. 56, 7th April 1981, page 140 P 57; & JP-A-56-11428 (RICOH K.K.) 04-02-1981**

(73) Proprietor: **HITACHI, LTD.**
**6, Kanda Surugadai 4-chome Chiyoda-ku Tokyo (JP)**

(72) Inventor: **Tatsuno, Kimio**
**4-14-6, Nishi-koigakubo**
**Kokubunji-shi Tokyo (JP)**
Inventor: **Kataoka, Keiji**
**728-19, Imafuku**
**Kawagoe-shi Saitama-ken (JP)**
Inventor: **Yonezawa, Seiji**
**2-6-11, Mejirodai**
**Hachioji-shi Tokyo (JP)**

(74) Representative: **Strehl, Peter, Dipl.-Ing. et al**
**Patentanwälte Strehl Schübel-Hopf Groening Schulz Maximilianstrasse 54 Postfach 22 14 55 D-8000 München 22 (DE)**

Courier Press, Leamington Spa, England.

## Description

The invention relates to a method of producing a hologram lens including the steps set forth in the first part of claim 1.

Such a method is known from "Optics Communications", vol. 8, July 1973, pages 239 to 243, and vol. 9, November 1973, pages 268 and 269.

Although not specifically mentioned in the above documents, it would be normal to produce a hologram in the same manner, with the holographic layer at the same location on the substrate, as it is used, by just inverting the beam path. In such a case, the beams will have to transmit the substrate either when producing or when using the hologram lens. In transmitting the substrate, however, adverse effects of refraction within the substrate, particularly aberration due to the substrate thickness, will occur.

It is the object of the present invention to produce a hologram lens which is free of the above defects.

This object is met by the method characterized in claim 1. By forming the concentric fringe pattern in a holographic layer that is applied on the inner spherical surface of the substrate and then transferring the layer to the outer spherical surface of another substrate, the beams do not have to transmit, and are therefor not influenced by, a substrate in either producing or using the hologram lens.

An embodiment of the invention will now be explained in connection with the drawing, in which

Fig. 1 illustrates a method of preparing a spherical hologram lens, and

Fig. 2 is a schematic representation showing a spherical hologram lens prepared according to the method of Fig. 1.

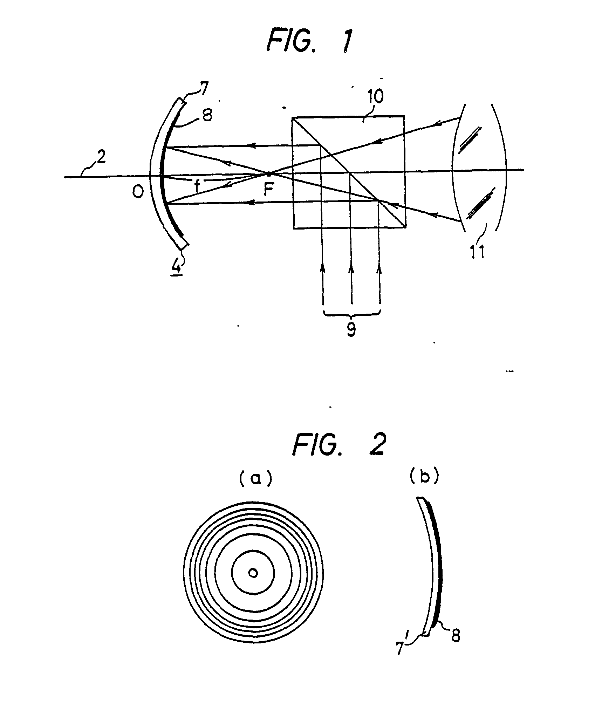

The spherical hologram lens of the present invention is prepared as described below. The following description deals with the caye of preparing the in-line-type spherical hologram lens as shown in Fig. 1. A coherent light is split into two beams through a beam splitter (not shown) or the like. One beam is a parallel reference beam 9 which is projected to a recording material 8 provided on a spherical substrate 7 via a beam splitter 10. The other beam is allowed to pass through a lens 11 having a desired divergence angle to form a wave front that is to be recorded, and is projected as an object beam to the recording material 8 via the substrate 7 where it is interfered by the reference beam 9 to form a hologram. The spherical hologram lens 4 is thus prepared.

Further, the reference beam is set to be in alignment with the object beam.

In order to remove the effect of refraction of the substrate 7, furthermore, it is suggested to apply a recording material onto the inner side of the substrate 7 to prepare a hologram by the same method as the one described above, and then to transfer the thus prepared hologram onto the outer side of the spherical surface of another substrate 7'.

It is allowable to use a so-called illumination hologram instead of the beam splitter 10 which sets the reference beam in alignment with the body beam.

The substrate 7 of hologram lens is composed of a glass or a plastic material, and the photosensitive material 8 is composed of silver salt, photoresist, gelatine dichromate, or the like. Further, if the relief mold is employed, the hologram can be reproduced in large amounts by the press-adhesion.

In any case, replication can be easily effected by the press-adhesion if the hologram lens is obtained in the relief type or in the form of a grating lens.

Fig. 2 is a diagram showing the aberration-reduced spherical hologram lens prepared according to the present invention, wherein the diagram (a) is a front view and the diagram (b) is a section view. The concentric pattern shown in Fig. 2(a) represents an interference pattern or a grating pattern that is recorded.

In using the spherical hologram lens of the present invention as an objective lens of, for instance, an optical disc device, when a disc substrate or parallel flat plate (having a thickness t and a refractive index n) composed of a glass or the like is interposed between the hologram lens and the recording film, it is recommended that the distance between the hologram surface and the recording film is selected to be $f + (1 - 1/n)t$ and that a radius of curvature of the hologram surface is selected to be slightly greater than the focal distance f in order to reduce spherical aberration that results from the parallel flat plate, such that the wave front aberration is minimized as a whole.

In the ultraviolet-ray regions and soft X-ray regions, furthermore, a solid material exhibits such a large light absorption coefficient that ordinary lenses are not utilizable. The spherical hologram lens of the present invention, however, can be used even in the regions of such short wavelengths. Namely, the spherical hologram lens of the present invention finds extensive applications such as an objective lens of a microscope having a high magnifying power.

The spherical hologram lens of the present invention can be used not only as an objective lens of an optical head in an optical disc device but also as a coupling lens. It offers its intrinsic features such as reduced weight, reduced size, low manufacturing cost, and easiness of replication.

## Claims

1. A method of producing a hologram lens, which comprises a spherical surface provided with a concentric fringe pattern, with the center of the spherical surface being located at a focal point (F) of the lens, wherein a holographic layer (8) having a spherical surface is irradiated with first and second beams and the hologram lens is formed by interference fringe patterns of the first beam with the second beam, wherein the first beam diverges from the center of the spherical surface and the second beam (9) is a collimated beam which is set to be on the same axis as the first beam, characterized in that the holographic layer is applied onto the inner spherical surface of a substrate (7) and the concentric fringe pattern formed in the holographic layer (8) is transferred to the outer surface of another substrate (7') which has the same shape as the first spherical surface.

2. Use of the hologram lens produced according to claim 1 as an objective lens or a coupling lens of an optical head in an optical disc device.

**Patentansprüche**

1. Verfahren zur Herstellung einer Hologrammlinse, die eine mit einem konzentrischen Ringmuster versehene sphärische Oberfläche mit einem im Brennpunkt (F) der Linse gelegenen Mittelpunkt aufweist, wobei eine holografische schicht (8) mit sphärischer Oberfläche mit einem ersten und einem zweiten Strahl bestrahlt und die Hologrammlinse durch Interferenz-Ringmuster des ersten Strahls mit dem zweiten Strahl gebildet wird, wobei der erste Strahl vom Mittelpunkt der sphärischen Oberfläche divergiert und der zweite Strahl (9) ein Parallelstrahl ist, der auf die gleiche Achse wie der erste Strahl eingestellt ist, dadurch gekennzeichnet, daß die holografische Schicht auf die innere sphärische Oberfläche eines Substrats (7) aufgetragen und das in der holografischen Schicht (8) gebildete konzentrische Rungmuster auf die Außenfläche eines weiteren Substrats (7') übertragen wird, das die gleiche Gestalt hat wie die erste sphärische Oberfläche.

2. Verwendung der nach Anspruch 1, hergestellten Hologrammlinse als Objektiv- oder Koppellinse des optischen Kopfes in einem optischen Plattengerät.

**Revendications**

1. Procédé de fabrication d'une lentille holographique, qui comprend une surface sphérique munie d'un motif de franges concentriques, le centre de la surface sphérique étant situé en un point focal (F) de la lentille, dans lequel une couche holographique (8) ayant une surface sphérique est irradiée avec des premier et second faisceaux et la lentille holographique est réalisée par des motifs de franges d'interférence du premier faisceau avec le second faisceau, dans lequel le premier faisceau diverge du centre de la surface sphérique et le second faisceau (9) est un faisceau collimaté qui est réglé pour se trouver sur le même axe que le premier faisceau, caractérisé en ce que la couche holographique est appliquée sur la surface sphérique interne d'un substrat (7) et le motif de franges concentriques réalisé dans la couche holographique (8) est transféré à la surface extérieure d'un autre substrat (7') qui possède la même forme que la première surface sphérique.

2. Utilisation de la lentile holographique réalisée selon la revendication 1 en tant qu'objectif ou lentille de couplage d'une tête optique dans un dispositif à disque optique.

## FIG. 1

## FIG. 2

(a)          (b)